Europäisches Patentamt

European Patent Office

Office européen des brevets

(11) Veröffentlichungsnummer: **0 312 629 B1**

(12) **EUROPÄISCHE PATENTSCHRIFT**

(45) Veröffentlichungstag der Patentschrift: **15.05.91**

(51) Int. Cl.⁵: **B65G 15/52**, A01D 17/10

(21) Anmeldenummer: **87115364.9**

(22) Anmeldetag: **21.10.87**

(54) **Siebkettenförderband.**

(43) Veröffentlichungstag der Anmeldung:
26.04.89 Patentblatt 89/17

(45) Bekanntmachung des Hinweises auf die
Patenterteilung:
15.05.91 Patentblatt 91/20

(84) Benannte Vertragsstaaten:
DE

(56) Entgegenhaltungen:
DE-A- 3 125 310
FR-A- 2 391 125
FR-A- 2 397 553

(73) Patentinhaber: **Franz Grimme Landmaschinenfabrik GmbH & Co. KG.
Wiesenstrasse 10
W-2845 Damme 1(DE)**

(72) Erfinder: **Unnerstall, Ernst-Heinrich
Im Winkel 3
W-2845 Damme/Dümmer(DE)**
Erfinder: **Brintrup, Hermann-Josef
Haferkamp 18
W-2845 Damme/Dümmer(DE)**
Erfinder: **Grimme, Franz, jun.
Thomasstrasse 3
W-2845 Damme/Dümmer(DE)**

(74) Vertreter: **Busse & Busse Patentanwälte
Postfach 1226 Grosshandelsring 6
W-4500 Osnabrück(DE)**

## Beschreibung

Die Erfindung bezieht sich auf ein Siebkettenförderband, insbesondere für Hackfruchterntemaschinen, in einer Ausbildung gemäß dem Oberbegriff des Anspruchs 1.

Bei einem bekannten Siebkettenförderband dieser Art (DE-OS 31 25 310) weisen die Riemenenden besondere, angeformte, die Gelenkaugen bildenden Enden auf, und das Riemenschloß besteht aus einem H-förmigen Zwischenstück, das in Verbindung mit zwei Kettenstäben jeweils eine gelenkige Verbindung zum benachbarten Riemenende herstellt. Bei einer derartigen Ausgestaltung liegen die im Bereich des Riemenschlosses angeordneten Kettenstäbe tiefer als die benachbarten, auf den Riemen selbstbefestigten Kettenstäbe, so daß sich eine unerwünschte Tasche bildet, welche ein Festsetzen von Gut begünstigt. Die Gelenkachsen befinden sich oberhalb der Mittelebene der Riemenenden und damit oberhalb der neutralen Phase, und das H-förmige Verbindungsstück steht mit seinen zur Längsrichtung des Riemens parallelen Schenkeln über die Riemenaußenkanten vor. Dies wirkt sich störend aus, wenn die Riemen an der Außen- und/oder der Innenkante durch Antriebsbzw. Umlenkrollen oder sonstige Führungselemente in seitlicher Richtung geführt werden sollen.

Der Erfindung liegt die Aufgabe zugrunde, ein Siebkettenförderband der eingangs genannten Art zu schaffen, bei dem bei zuverlässiger Verbindung von durch einfache Abschnitte gebildeten Riemenenden sämtliche Stäbe in gleichem Höhenabstand zur Mittelebene des Riemens gelegen sind und bei dem die Riemen an ihren Randkanten seitlich geführt werden können.

Die Erfindung löst diese Aufgabe mit den Merkmalen des Anspruchs 1. Hinsichtlich wesentlicher weiterer Ausgestaltungen wird auf die Ansprüche 2 bis 11 verwiesen.

Das erfindungsgemäße Siebkettenförderband gewährleistet eine feste und sichere Verbindung von durch einen einfachen Abschnitt gebildeter Riemenenden, so daß Sonderausführungen von Riemen vermieden sind. Sämtliche Kettenstäbe befinden sich in einem einheitlichen Abstand zur Mittelebene des Riemens, so daß die Bildung von Gutansammlungen in Taschenbereichen vermieden sind. Das Riemenschloß beschränkt sich in seiner Breite auf die Breite des Riemens oder unterschreitet diese geringfügig, so daß auch im Schloßbereich die Riemen durch Führungsmittel innen- und außenseitig geführt werden können. Dabei ermöglicht die erfindungsgemäße Ausführung zugleich eine sehr kleine Stabteilung für die Kettenstäbe, z.B. von 20 mm oder darunter, ohne daß im Schloßbereich die Gleichförmigkeit der Stabteilung verlorengeht.

Weitere Einzelheiten und Vorteile ergeben sich aus der nachfolgenden Beschreibung in Verbindung mit der Zeichnung, in der mehrere Ausführungsbeispiele des Gegenstands der Erfindung näher veranschaulicht sind. In der Zeichnung zeigen:

Fig. 1 eine abgebrochene Draufsicht auf ein Siebkettenförderband im Bereich eines Riemenschlosses,

Fig. 2 eine Außenseitenansicht zu Fig. 1,

Fig. 3 eine Ansicht ähnlich Fig. 1 einer zweiten Ausführung des Siebkettenförderbandes nach der Erfindung,

Fig. 4 eine Außenseitenansicht zu Fig. 3,

Fig. 5 eine Ansicht ähnlich Fig. 1 und 3 einer dritten Ausführungsform des Siebkettenförderbandes nach der Erfindung, und

Fig. 6 eine Außenseitenansicht zu Fig. 5.

Die in der Zeichnung lediglich in einem Ausschnitt dargestellten Siebkettenförderbänder, die insbesondere für den Einsatz in Hackfruchterntemaschinen bestimmt sind, bestehen jeweils aus zumindest zwei parallel im Abstand zueinander verlaufenden geschlossenen Trägerriemen 1, von denen jeweils nur der linke Trägerriemen 1 veranschaulicht ist. Ferner umfassen die Siebkettenförderbänder eine Anzahl von Kettenstäben, von denen die unmittelbar mit dem Trägerriemen 1 verbundenen Kettenstäben mit 2 und die im Schloßbereich angeordneten Kettenstäbe mit 3 bezeichnet sind. Sämtliche Kettenstäbe 2,3 sind in untereinander gleichmäßigen Abständen über die Länge der Trägerriemen 1 verteilt angeordnet. Sie erstrecken sich quer zu einer Förderbewegungsrichtung 4 und haben einen Durchmesser, der je nach Abstandsteilung beispielsweise 10 oder 12 mm beträgt. Als Abstandsteilung kann irgendeine gewünschte Teilung vorgesehen sein. Die Kettenstäbe 2 sind an ihren die Riemen 1 übergreifenden Enden 5 flachgedrückt und durch zwei Niete 6 mit dem Riemen fest verbunden, welche entsprechende Lochungen in den Riemen 1 durchgreifen.

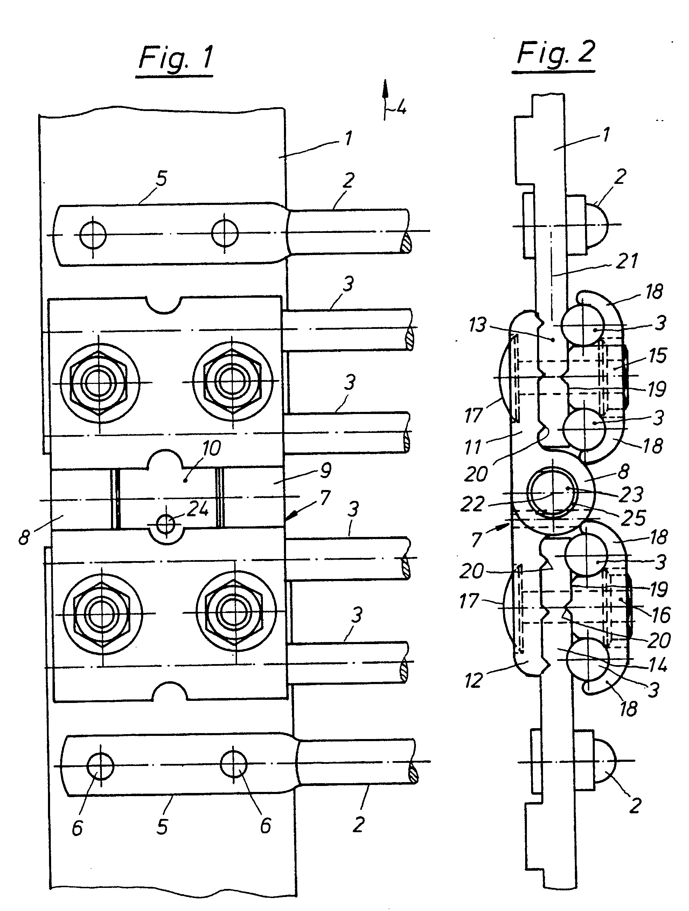

Das in Fig. 1 dargestellte Riemenschloß 7 ist als gesondertes Scharnier ausgebildet, dessen die Gelenkaugen 8,9 bzw. 10 tragenden Anschlußplatten 11 bzw. 12 jeweils ein freies Riemenende untergreifen und gemeinsam mit je einem auf der Oberseite des zugeordneten Riemenendes 13,14 angeordneten Druckstück 15,16 die Riemenenden 13,14 zwischen sich festlegen. Dabei ist jedes der Druckstückes 15,16 mittels Lochungen des Riemenendes 13,14 durchgreifende Schrauben 17 gegen das Riemenende 13 bzw. 14 einrückbar, und die Druckstücke 15,16 übertragen ihre Druckkräfte über zwei parallele, ihnen jeweils zugeordnete Kettenstäbe 3 auf das Riemenende 13 bzw. 14.

Jedes Druckstück 15,16 ist dabei mit Formansätzen 18 versehen, mit denen es die Kettenstäbe 3 formschlüssig übergreift, die in Montagestellung unterseitig über die Unterseite 19 der Druckstücke 15,16 vorspringen. Zusätzlich sind die den Riemen zugewandten Eingriffsflächen der Druckstücke 15,16 bzw. der Anschlußplatten 11,12 mit rippenförmigen, bei Druckeingriff sich in die Riemenenden 13,14 formschlüssig eindrückenden Vorsprüngen 20 versehen, die zusammen mit den den Druckstücken 15,16 zugeordneten Kettenstäben 3 eine feste Verankerung der Riemenenden 13,14 in den Scharnierteilen des Riemenschlosses 7 bewirken.

In ihrer Montageendstellung haben die in die Riemenoberfläche eingedrückten Kettenstäbe 3 einen Abstand ihrer Achsen zur Mittelebene 21 des Riemens, der mit dem Achsabstand der unmittelbar an Trageriemen 1 befestigten Kettenstäbe 2 übereinstimmt. Das Scharnier 7 ist einachsig ausgebildet, und die Gelenkachse 22 liegt ebenfalls in der Mittelebene 21 des Riemens 1.

Der Gelenkbolzen 23 hat eine Länge, welche der Breite der Anschlußplatten 11,12 des Scharniers gleich ist. Der Gelenkbolzen 23 durchgreift dabei das mittlere Gelenkauge 10 der Anschlußplatte 11 und die beiden äußeren Gelenkaugen 8,9 der Anschlußplatte 12, wobei er durch einen Sperrstift 24 im mittleren Gelenkauge 10 gegen axiale Bewegung und Verdrehung festgelegt ist. In den äußeren Gelenkaugen 8,9 sind Kunststoffbüchsen 25 vorgesehen, die auswechselbare Verschleißelemente bilden.

Die Schrauben 17 können sich durch Lochungen im Riemen hindurch erstrecken, die gesondert an den Enden angebracht sind. Bevorzugt sind jedoch, und dies ist mit der erfindungsgemäßen Ausführung möglich, für diese Lochungen jene Lochungen für die Niete vorgesehen, die in regelmäßigen Abständen ohne hin in den Riemen eingestanzt werden, so daß ein gesonderter Lochungsarbeitsgang entfällt.

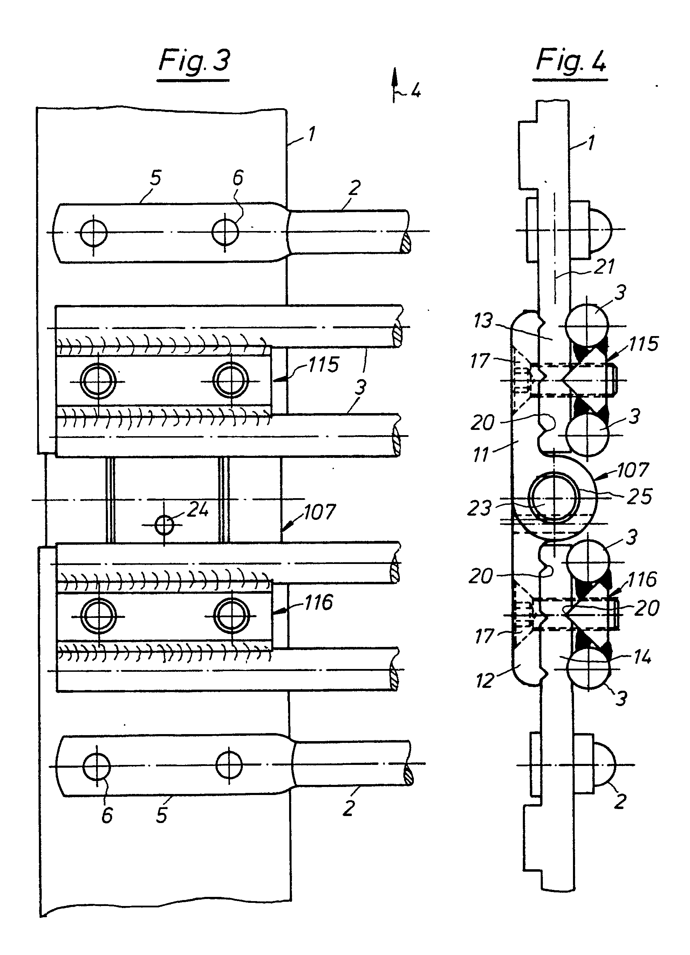

Das Riemenschloß 107 in Fig. 3 und 4 unterscheidet sich lediglich hinsichtlich der Druckstücke 115,116, die als etwa prismatische Stege ausgebildet und mit ihren zugeordneten Kettenstäben 3 zu einer Einheit verschweißt sind. Eine solche Ausführung findet insbesondere bei Siebkettenbändern mit sehr enger Stabteilung Anwendung.

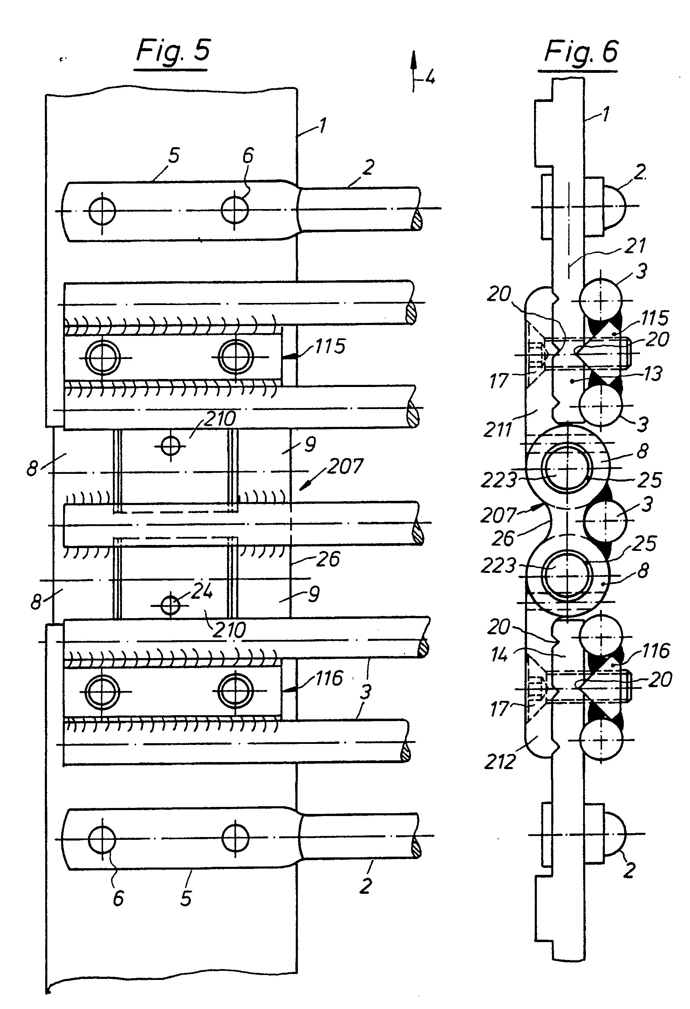

Bei der Ausführung des Siebkettenbandes nach Fig. 5 und 6 ist das Riemenschloß 207 doppelachsig ausgebildet. Das Scharnier 207 entspricht im wesentlichen dem in Fig. 3 und 4 mit dem Unterschied, daß an beiden Riemenenden 13,14 Anschlußplatten 211,212, mit jeweils einem mittleren Gelenkauge 210 Verwendung finden. Zwischen diesen Scharnierteilen ist ein Zwischenteil 26 angeordnet, das je mit zwei Paar äußeren Gelenkaugen 8,9 versehen ist, die zusammen mit den inneren Gelenkaugen 210 von zwei Gelenkbolzen 223 durchgriffen sind.

Auf dem Zwischenteil 26 ist ebenfalls ein Kettenstab 3 befestigt, z.B. aufgeschweißt, um auch in diesem Bereich die Stabteilung unverändert weiterzuführen.

**Ansprüche**

1. Siebkettenförderband, insbesondere für Hackfruchterntemaschinen, bestehend aus zumindest zwei parallel im Abstand zueinander verlaufenden geschlossenen Trägerriemen 1, einer Anzahl von Kettenstäben (2) die in gleichmäßiger Abstandsverteilung über die Länge der Trägerriemen (1) an ihren Enden (5) mit diesen verbunden sind und sich quer zur Förderbewegungsrichtung (4) erstrecken, und aus einem jeweils die Enden eines Trägerriemens (1) miteinander verbindenden Riemenschloß (7,107,207), **dadurch gekennzeichnet, daß** das Riemenschloß (7,107,207) als gesondertes Scharnier (7;107;207) ausgebildet ist, dessen die Gelenkaugen (8,9,10) tragenden Anschlußplatten (11,12) jeweils ein freies Riemenende (13,14) untergreifen und gemeinsam mit je einem auf der Oberseite des Riemenendes angeordneten Druckstück (15,16;115,116)) die Riemenenden (13,14) zwischen sich festlegen, wobei das Druckstück (15,16;115,116)) mittels Lochungen des Riemenendes (13,14) durchgreifenden Schrauben (17) gegen sein Riemenende (13 bzw. 14) einrückbar ist und seine Druckkraft über zwei parallele, ihm zugeordnete Kettenstäbe (3) auf das Riemenende (13 bzw. 14) überträgt.

2. Siebkettenförderband nach Anspruch 1, **dadurch gekennzeichnet, daß** das Druckstück (15,16) mit Formansätzen (18) die ihm zugeordneten Kettenstäbe (3) formschlüssig übergreift, und daß in Montagestellung die Kettenstäbe (3) unterseitig über das Druckstück (15,16) vorstehen.

3. Siebkettenförderband nach Anspruch 1, **dadurch gekennzeichnet, daß** das Druckstück (115,116) mit den beiden Kettenstäben (3) zu einer Einheit verschweißt ist.

4. Siebkettenförderband nach einem der Ansprüche 1 bis 3, **dadurch gekennzeichnet, daß** die den Riemenenden (13,14) zugewandten Eingriffsflächen der Druckstücke (15,16;115,116) und der Anschlußplatten (11,12) mit rippenförmigen, bei Druckeingriff sich in die Riemenenden (13,14) formschlüssig eindrückenden Vorsprüngen (20) versehen sind.

5. Siebkettenförderband nach einem der Ansprüche 1 bis 4, **dadurch gekennzeichnet, daß** das Scharnier (7;107;207) einachsig oder doppelachsig ausgebildet ist und Gelenkbolzen (23;223) aufweist, welche der Breite der Anschlußplatten (11,12) höchstens gleich ist.

6. Siebkettenförderband nach einem der Ansprüche 1 bis 5, **dadurch gekennzeichnet, daß** ein Gelenkbolzen (23) jeweils ein mittleres Gelenkauge (10) an einer Anschlußplatte (12) und zwei äußere Gelenkaugen (8,9) an der anderen Anschlußplatte (11) durchgreift und dabei im mittleren Gelenkauge (10) festgelegt ist.

7. Siebkettenförderband nach Anspruch 6, **dadurch gekennzeichnet, daß** in den äußeren Gelenkaugen (8,9) je eine Kunststofflagerbüchse (25) vorgesehen ist.

8. Siebkettenförderband nach Anspruch 5, **dadurch gekennzeichnet, daß** bei doppelachsiger Ausführung des Scharniers (207) ein Zwischenteil (26) mit zwei Paar äußeren Gelenkaugen (8,9) vorgesehen ist, und daß das Zwischenteil (26) mit mit jeweils mittleren Gelenkaugen (10) versehenen Anschlußplatten (12) verbunden ist.

9. Siebkettenförderband nach Anspruch 8, **dadurch gekennzeichnet, daß** auf dem Zwischenteil (26) mittig ein weiterer Kettenstab (3) angeordnet, z.B. angeschweißt ist.

10. Siebkettenförderband nach einem der Ansprüche 1 bis 9, **dadurch gekennzeichnet, daß** die Gelenkachse(n) des Scharniers (7;107;207) in Höhe der Mittelebene (21) der Riemenenden (13,14) gelegen ist bzw. sind.

11. Siebkettenförderband nach einem der Ansprüche 1 bis 10, **dadurch gekennzeichnet, daß** die Schrauben (17) Nietlochungen in den Riemenenden (13,14) durchgreifen.

**Claims**

1. A barred belt conveyor particularly for root crop harvesting machines, consisting of at least two closed carrier belts (1) extending parallel with and at a distance from each other, a number of bars (2) which at regular intervals over the length of the carrier belts (1) are connected thereto at their ends (5) extending transversely to the direction of conveyance (4) and further consisting of a belt fastener (7, 107, 207), which connects the ends of a carrier belt (1) to one another, characterised in that the belt fastener (7, 107, 207) is constructed as a separate hinge (7, 107, 207) of which the connecting plates (11 , 12) which carry the hinge lugs (8, 9, 10) in each case engage under a free belt end (13, 14) and jointly with a thrust member (15, 16; 115, 116) disposed on the upper face of the belt end establish the belt ends (13, 14) between then, the thrust member (15, 16; 115, 116) being capable of being moved towards its belt end (13, 14) by screws (17) engaging through apertures in the belt end (13, 14) and transmitting its thrust force through two parallel associated bars (3) to the belt end (13, 14).

2. A barred belt conveyor according to claim 1 characterised in that the thrust member (15, 16) has projections (18) which positively engage over associated bars (3) and in that in the installed position the bars (3) project under the thrust member (15, 16).

3. A barred belt conveyor according to claim 1, characterised in that the thrust member (115, 116) is welded into one unit together with the two bars (3).

4. A barred belt conveyor according to one of claims 1 to 3, characterised in that the engaging surfaces of the thrust members (15, 16; 115, 116) which are towards the belt ends (13, 14) and of the connection plates (11 , 12) are provided with rib-like projections (20) which, when pressure is applied, are pressed positively into the belt ends (13, 14).

5. A barred belt conveyor according to one of claims 1 to 4, characterised in that the hinge (7; 107, 207) is of uniaxial or biaxial construction and comprises hinge pins (23; 223) which are at most equal to the width of the connection plates (11 , 12).

6. A barred belt conveyor according to one of claims 1 to 5, characterised in that the hinge pin (23) passes in each case through a central hinge lug (10) on a connecting plate (12) and two outer hinge lugs (8, 9) on the other connecting plate (11) and is thereby fixed in the middle hinge lug (10).

7. A barred belt conveyor according to claim 1, characterised in that a synthetic plastics bearing bush (25) is provided in each of the outer hinge lugs (8, 9).

8. A barred belt conveyor according to claim 5, characterised in that in the case of a biaxial construction of the hinge (207) an intermediate part (26) is provided which has two pairs of outer hinge lugs (8, 9) and in that the intermediate part (26) is connected to connection plates (10) which are in each case provided with middle hinge lugs (10).

9. A barred belt conveyor according to claim 8, characterised in that there is disposed, for example welded, onto the intermediate part (26) a further centrally disposed bar (3).

10. A barred belt conveyor according to one of claims 1 to 9, characterised in that the hinge axis or axes of the hinge (7, 107, 207) is or are disposed at the height of the median plane (21) of the belt ends (13, 14).

11. A barred conveyor belt according to one of claims 1 to 10, characterised in that the screws (17) pass through rivet holes in the belt ends (13, 14).

## Revendications

1. Bande transporteuse de criblage, en particulier pour des machines à récolter les plantes sarclées, constituée d'au moins deux courroies de support (1) sans fin s'étendant parallèlement à distance l'une de l'autre, d'un certain nombre de barres de criblage (2) qui sont reliées à ces courroies, à leurs extrémités (5), selon une répartition uniforme sur toute la longueur des courroies de support (1) et qui s'étendent transversalement au sens du transport (4) et d'une attache de courroie (7, 107, 207) reliant chaque fois les extrémités d'une courroie de support (1) l'une à l'autre, caractérisée en ce que l'attache de courroie (7, 107, 207) a la forme d'une charnière séparée (7, 107, 207), dont les lames d'ancrage (11, 12) portant les oeils d'articulation (8, 9, 10) sont chacune en prise avec le dessous d'une extrémité de courroie libre (13, 14) et, conjointement chacune avec une pièce de pression (15, 16; 115, 116) disposée sur la face supérieure de l'extrémité de courroie, retiennent entre elles les extrémités de courroie (13, 14), la pièce de pression (15, 16; 115, 116) pouvant être serrée en prise avec son extrémité de courroie au moyen de vis traversant des trous ménagés dans l'extrémité de courroie (13, 14) et sa force de pression étant transmise à l'extrémité de courroie (13, 14) par l'intermédiaire de deux barres de criblage (3) parallèles qui y sont associées.

2. Bande transporteuse de criblage suivant la revendication 1, caractérisée en ce que la pièce de pression (15, 16) attaque les barres de criblage (3) qui y sont associées, avec épousement de formes, au moyen de saillies conformées et qu'en position de montage, les barres de criblage (3) dépassent l'organe de pression (15, 16) vers le bas.

3. Bande transporteuse de criblage suivant la revendication 1, caractérisée en ce que l'organe de pression (115, 116) est soudé d'un seul tenant aux deux barres de criblage (3).

4. Bande transporteuse de criblage suivant l'une quelconque des revendications 1 à 3, caractérisée en ce que les surfaces d'attaque des organes de pression (15, 16; 115, 116) et des lames d'ancrage (11, 12) opposées aux extrémités de courroie (13, 14) sont pourvues de saillies (20) en forme de nervures qui, sous l'effet d'une pression, s'enfoncent avec épousement de formes dans les extrémités de la courroie (13, 14).

5. Bande transporteuse de criblage suivant l'une quelconque des revendications 1 à 4, caractérisée en ce que la charnière (7, 107, 207) est une charnière à un seul axe ou à deux axes et présente un boulon d'articulation (23; 223), dont la largeur est au maximum égale à celle des lames d'ancrage (11, 12).

6. Bande transporteuse de criblage suivant l'une quelconque des revendications 1 à 5, caractérisée en ce qu'un boulon d'articulation (23) traverse respectivement un oeil d'articulation médian (10) sur une lame d'ancrage (12) et deux oeils d'articulation extérieurs (8, 9) sur l'autre lame d'ancrage (11) et est, en outre, bloqué dans l'oeil d'articulation médian (10).

7. Bande transporteuse de criblage suivant la revendication 6, caractérisée en ce que dans chacun des oeils d'articulation extérieurs (8, 9) est prévue une douille-palier en matière plastique (25).

8. Bande transporteuse de criblage suivant la revendication 5, caractérisée en ce que, dans la réalisation à deux axes de la charnière (207), est prévue une pièce intermédiaire (26) pourvue de deux paires d'oeils d'articulation extérieurs (8, 9), et que la pièce intermédiaire (26) est reliée à des lames d'ancrage pourvues respectivement d'oeils d'articulation médians (10).

9. Bande transporteuse de criblage suivant la revendication 8, caractérisée en ce qu'une barre de criblage (3) supplémentaire est montée, par exemple soudée, au milieu de la partie intermédiaire (26).

10. Bande transporteuse de criblage suivant l'une quelconque des revendications 1 à 9, caractérisée en ce que le ou les axes d'articulation de la charnière (7, 107, 207) est ou sont disposés à hauteur du plan médian (21) des extrémités de courroie (13, 14).

11. Bande transporteuse de criblage suivant l'une quelconque des revendications 1 à 10, caractérisée en ce que les vis (13, 14) traversent des trous de rivet dans les extrémités (13, 14) de la courroie.

## Fig. 1

## Fig. 2

# Fig. 3

# Fig. 4

## Fig. 5

## Fig. 6